# EUROPÄISCHE PATENTSCHRIFT

(11) **EP 4 451 214 B1**
(45) Veröffentlichungstag und Bekanntmachung des Hinweises auf die Patenterteilung: **15.10.2025**
(21) Anmeldenummer: 24164905.2
(22) Anmeldetag: 20.03.2024
(51) Int. Cl.: G06T 7/60

(54) **VERFAHREN ZUR BESTIMMUNG EINER PROFILTIEFE EINES FAHRZEUGREIFENS**
METHOD FOR DETERMINING A TREAD DEPTH OF A VEHICLE TYRE
PROCÉDÉ DE DÉTERMINATION D'UNE PROFONDEUR DE SCULPTURE D'UN PNEU DE VÉHICULE

(30) Priorität: 20.04.2023 DE 102023203614
(43) Veröffentlichungstag der Anmeldung: 23.10.2024
(73) Patentinhaber: Continental Reifen Deutschland GmbH, 30175 Hannover (DE)
(72) Erfinder: Dr. Pietsch, Holger, 30175 Hannover (DE); Voelker, Bert, 30175 Hannover (DE); Dr. Strzelczyk, Matthias, 30175 Hannover (DE); Dr. Großkreutz, Holger, 30175 Hannover (DE); Dr. Fricke, Lukas, 30175 Hannover (DE); Dixo, Eduardo, 4760-606 Lousado (PT); Ferreira Lopes, Daniel Pedro, 4760-606 Lousado (PT)
(74) Vertreter: Continental Corporation

(56) Entgegenhaltungen:
- KR-A- 20180 085 574
- US-A1- 2017 190 223
- US-A1- 2021 197 625
- US-A1- 2022 097 463
- US-B1- 9 805 697

## Beschreibung

Die Erfindung betrifft ein Verfahren zur Bestimmung einer Profiltiefe eines Fahrzeugreifens.

Die Erfindung geht aus von einem Verfahren zur Bestimmung einer Profiltiefe eines Fahrzeugreifens, aufweisend die folgenden Schritte:
- Bereitstellen eines Fahrzeugreifens;
- Bereitstellen einer Bildaufnahmevorrichtung, wobei die Bildaufnahmevorrichtung dazu vorgesehen ist, ein Bild des Fahrzeugreifens aufzunehmen;
- Aufnahme eines Bildes des Fahrzeugreifens mittels der Bildaufnahmevorrichtung;
- Bereitstellen eines Modells eines Zylinders, wobei der Zylinder den Fahrzeugreifen einhüllt und wobei eine Gerade, die entlang einer Höhen- und Symmetrieachse des Zylinders verläuft, insbesondere gleich zu einer Gerade ist, die entlang einer Rotationsachse des Fahrzeugreifens verläuft;
- Bestimmen der Rotationsachse des Fahrzeugreifens, wobei der Fahrzeugreifen zur Rotation um die Rotationsachse in eine Umlaufrichtung des Fahrzeugreifens vorgesehen ist;
- Bereitstellen einer Bildverarbeitungsvorrichtung, wobei die Bildverarbeitungsvorrichtung eingerichtet ist, anhand des Bildes des Fahrzeugreifens und des Modells des Zylinders und der Rotationsachse ein 3D-Modell des Fahrzeugreifens zu erzeugen;
- Erzeugen eines 3D-Modells des Fahrzeugreifens anhand des Bildes des Fahrzeugreifens und des Modells des Zylinders und der Rotationsachse mittels der Bildverarbeitungsvorrichtung innerhalb eines von der Bildaufnahmevorrichtung bereitgestellten räumlichen Koordinatensystems;
- Bereitstellen einer Auswertevorrichtung, wobei die Auswertevorrichtung zur Bestimmung einer Profiltiefe des Fahrzeugreifens in Abhängigkeit des 3D-Modells des Fahrzeugreifens vorgesehen ist.

Es handelt sich um eine Aufnahme eines Bildes von einer Oberfläche des Fahrzeugreifens. Eine Oberfläche des Fahrzeugreifens ist eine von dem Fahrzeugreifen weg orientierte Fläche des Fahrzeugreifens. Die Oberfläche kann auch als Außenfläche bezeichnet werden.

Bei dem Verfahrensschritt der Aufnahme eines Bildes des Fahrzeugreifens wird ein Bild mindestens eines Bereichs des Fahrzeugreifens, also eines Bereichs der Oberfläche des Fahrzeugreifens, oder ein Bild des vollständigen Fahrzeugreifens, also der vollständigen Oberfläche des Fahrzeugreifens, mittels der Bildaufnahmevorrichtung aufgenommen.

Bei der Bildaufnahmevorrichtung handelt es sich beispielsweise um eine Kamera. Bei der Bildverarbeitungsvorrichtung handelt es sich beispielsweise um einen Computer.

Bei dem Verfahrensschritt des Erzeugens eines 3D-Modells, also dreidimensionalen Modells, des Fahrzeugreifens, wird ein 3D-Modell eines Bereichs des Fahrzeugreifens oder ein 3D-Modell des vollständigen Fahrzeugreifens erzeugt. Bei dem 3D-Modell handelt es sich somit um ein 3D-Modell eines Bereichs der Oberfläche des Fahrzeugreifens oder um ein 3D-Modell der vollständigen Oberfläche des Fahrzeugreifens.

Bei dem Zylinder handelt es sich um ein Modell eines Zylinders mit einem kreisförmigen Querschnitt. Bei dem Modell handelt es sich beispielsweise um ein mathematisches und/oder computergeneriertes Modell eines Zylinders. Ein Reifenzenit des Fahrzeugreifens läuft entlang der Mantelfläche des Zylinders und parallel zu dem kreisförmigen Querschnitt des Zylinders. Die Symmetrieachse des Zylinders steht rechtwinklig zu dem kreisförmigen Querschnitt des Zylinders. Die Verwendung des Zylinders ermöglicht eine geometrische Analyse und Betrachtung der Oberfläche des Fahrzeugreifens.

Bei der Auswertevorrichtung handelt es sich beispielsweise um eine elektronische Auswertevorrichtung oder um einen Computer.

Bei dem Fahrzeugreifen kann es sich beispielsweise um eine PKW-Fahrzeugreifen, um einen LKW-Fahrzeugreifen oder um einen Zweirad-Fahrzeugreifen handeln.

Aus dem Stand der Technik sind Verfahren zur Bestimmung einer Profiltiefe eines Fahrzeugreifens bekannt. Dabei ist es aus dem Stand auch bekannt, dass ein Modell eines Zylinders bereitgestellt wird, wobei der Zylinder den Fahrzeugreifen einhüllt und wobei eine Gerade, die entlang einer Höhen- und Symmetrieachse des Zylinders verläuft, insbesondere gleich zu einer Gerade ist, die entlang der Rotationsachse des Fahrzeugreifens verläuft. Dabei könnte es gemäß der aus dem Stand der Technik bekannten Verfahren beispielsweise zu Fehlern bei der Anpassung des Zylinders an die Oberfläche des Fahrzeugreifens kommen. Der Zylinder würde den Fahrzeugreifen zwar teilweise einhüllen, allerdings könnte das von der Bildaufnahmevorrichtung bereitgestellte räumliche Koordinatensystem, in dem auch der Zylinder betrachtetet und verwendet wird, gegenüber einem solchen Koordinatensystem, das durch den Fahrzeugreifen selbst festgelegt werden kann, verschoben oder verdreht sein. Ein 3D-Modell des Fahrzeugreifens, das in Abhängigkeit des Bildes des Fahrzeugreifens und des Modells des Zylinders und der Rotationsachse das innerhalb eines von der Bildaufnahmevorrichtung bereitgestellten räumlichen, aber gegenüber dem durch den Fahrzeugreifen selbst festgelegten Koordinatensystem verschobenen, Koordinatensystem erzeugt worden ist, könnte zu einer inkorrekten Bestimmung der Profiltiefe des Fahrzeugreifens führen.

Durch den Fahrzeugreifen selbst kann beispielsweise ein Koordinatensystem anhand der Rotationsachse des Fahrzeugreifens und anhand des Gravitationsvektors am Ort des Fahrzeugreifens, sowie anhand eines dritten Vektors festgelegt werden. Dabei steht der dritte Vektor beispielsweise rechtwinklig zu der Rotationsachse des Fahrzeugreifens und zu dem Gravitationsvektor.

Der Erfindung liegt daher die Aufgabe zu Grunde, ein Verfahren zur Bestimmung einer Profiltiefe eines Fahrzeugreifens bereitzustellen, wobei mittels des Verfahrens ein 3D-Modell des Fahrzeugreifens in einem durch den Fahrzeugreifen selbst festgelegten Koordinatensystem betrachtet werden kann, wodurch eine Profiltiefe des Fahrzeugreifens mit höherer Sicherheit korrekt bestimmt werden kann.

Gelöst wird die erfindungsgemäß gestellte Aufgabe dadurch, dass das Verfahren die folgenden weiteren Schritte aufweist:
- Bestimmen eines Normalvektors einer Mantelfläche des Zylinders, wobei der Normalvektor der Mantelfläche des Zylinders parallel zu einer Bildaufnahmerichtung des Bildes des Fahrzeugreifens liegt;
- Bestimmung eines Gravitationsvektors der Erde am Ort des Fahrzeugreifens;
- Erzeugen eines räumlichen Referenz-Koordinatensystems in Abhängigkeit der Rotationsachse des Fahrzeugreifens, des Gravitationsvektors der Erde am Ort des Fahrzeugreifens und des Normalvektors der Mantelfläche des Zylinders;
- Überführen des 3D-Modells des Fahrzeugreifens aus dem von der Bildaufnahmevorrichtung bereitgestellten räumlichen Koordinatensystem in das räumliche Referenz-Koordinatensystem;
- Bestimmen der Profiltiefe des Fahrzeugreifens in Abhängigkeit des, in das räumliche Referenz-Koordinatensystem überführten, 3D-Modells des Fahrzeugreifens.

Der Gravitationsvektors der Erde am Ort des Fahrzeugreifens entspricht im Wesentlichen dem Gravitationsvektor der Erde am Ort der Bildaufnahmevorrichtung.

Das Überführen des 3D-Modells des Fahrzeugreifens aus dem von der Bildaufnahmevorrichtung bereitgestellten räumlichen Koordinatensystem in das räumliche Referenz-Koordinatensystem erfolgt durch ein Umrechnen des bereitgestellten räumlichen Koordinatensystems in das räumliche Referenz-Koordinatensystem. Das Umrechnen erfolgt beispielsweise mittels einer Transformation der Koordinaten, die in kartesischer oder polarer Form vorliegen können. Das Überführen oder Umrechnen kann beispielsweise elektronisch oder mittels der Auswertevorrichtung erfolgen.

Das räumliche Referenz-Koordinatensystem entspricht dem durch den Fahrzeugreifen selbst festgelegten Koordinatensystem. Das 3D-Modell wird somit in dem durch den Fahrzeugreifen selbst festgelegten Koordinatensystem betrachtet. Eine Profiltiefe des Fahrzeugreifens kann anhand dieses Modells mit höherer Sicherheit korrekt bestimmt werden.

Somit wird ein verbessertes Verfahren zur Bestimmung einer Profiltiefe eines Fahrzeugreifens bereitgestellt.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung wird ein Kreuzprodukt des Normalvektors der Mantelfläche des Zylinders mit dem Gravitationsvektor der Erde am Ort des Fahrzeugreifens gebildet. Dabei wird die Rotationsachse des Fahrzeugreifens in Abhängigkeit eines Ergebnisvektors des Kreuzprodukts bestimmt. Insbesondere wird das 3D-Modell des Fahrzeugreifens in Abhängigkeit dieser Rotationsachse bestimmt und das 3D-Modell des Fahrzeugreifens aus dem von der Bildaufnahmevorrichtung bereitgestellten räumlichen Koordinatensystem in das räumliche Referenz-Koordinatensystem überführt.

Gemäß einer weiteren vorzugsweisen Ausgestaltungsform der vorliegenden Erfindung wird die Bildaufnahmerichtung mit einem Normalvektor der Mantelfläche des Zylinders verglichen, wobei für den Fall, wonach die Bildaufnahmerichtung zu keinem Normalvektor der Mantelfläche des Zylinders parallel liegt, das von der Bildaufnahmevorrichtung bereitgestellte räumliche Koordinatensystem derart räumlich zu dem Fahrzeugreifen ausgerichtet wird, bis die Bildaufnahmerichtung parallel zu einem Normalvektor der Mantelfläche des Zylinders liegt. Diese Ausrichtung des von der Bildaufnahmevorrichtung bereitgestellten räumlichen Koordinatensystems kann beispielsweise durch ein Kreuzprodukt erfolgen. Beispielsweise kann anhand eines Kreuzproduktes des Gravitationsvektors der Erde am Ort des Fahrzeugreifens mit einem Vektor parallel zu der Rotationsachse des Fahrzeugreifens ein dritter Vektor erzeugt werden, wobei der Gravitationsvektor am Ort des Fahrzeugreifens der Vektor parallel zu der Rotationsachse und der dritte Vektor das Referenz-Koordinatensystem definieren. Der betrachtete Fahrzeugreifen wird mittels der Bildaufnahmevorrichtung zunächst in dem von der Bildaufnahmevorrichtung bereitgestellten räumlichen Koordinatensystem dargestellt. Durch das Kreuzprodukt kann die Rotation des von der Bildaufnahmevorrichtung bereitgestellten räumlichen Koordinatensystems in das räumliche Referenz-Koordinatensystem erfolgen. Diese Überführung kann beispielsweise mittels einer Transformationsmatrix durchgeführt werden. Die Transformationsmatrix beschreibt mathematisch den Übergang von dem von der Bildaufnahmevorrichtung bereitgestellten räumlichen Koordinatensystem in das räumliche Referenz-Koordinatensystem.

Somit wird das von der Bildaufnahmevorrichtung bereitgestellte räumliche Koordinatensystem derart ausgerichtet, dass es mit dem räumlichen Referenz-Koordinatensystem übereinstimmt.

Weitere Vorteile, Merkmale und Einzelheiten, auf die die Erfindung in ihrem Umfang aber nicht beschränkt ist, werden nun anhand der Zeichnung näher beschrieben.

Es zeigt:

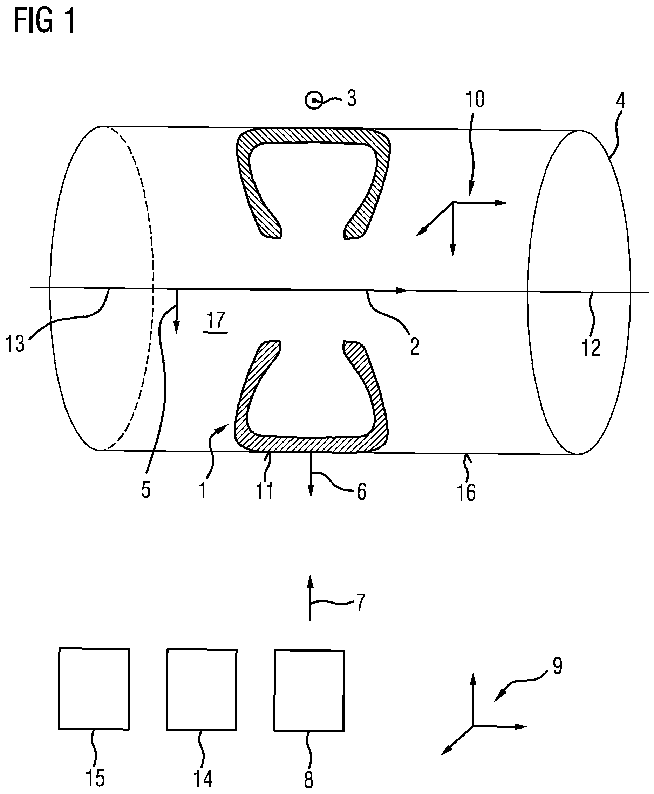

Fig. 1: Eine schematische Darstellung eines Fahrzeugreifens.

In der Figur 1 ist ein Fahrzeugreifen 1 schematisch in Radialschnittansicht dargestellt. Der Fahrzeugreifen 1 ist um eine Rotationsachse 2 in eine Umlaufrichtung 3 rotierbar. Mit einer Bildaufnahmevorrichtung 8 kann ein Bild einer Oberfläche 11 des Fahrzeugreifens 1 aufgenommen werden.

Erfindungsgemäß wird ein Modell eines Zylinders 4 bereitgestellt, wobei der Zylinder 4 den Fahrzeugreifen 1 einhüllt und wobei eine Gerade 12, die entlang einer Höhen- und Symmetrieachse des Zylinders 4 verläuft, insbesondere gleich zu einer Gerade 13 ist, die entlang der Rotationsachse 2 des Fahrzeugreifens 1 verläuft.

Erfindungsgemäß wird eine Bildverarbeitungsvorrichtung 14 bereitgestellt, wobei die Bildverarbeitungsvorrichtung 14 eingerichtet ist, anhand des Bildes des Fahrzeugreifens 1 und des Modells des Zylinders 4 und der Rotationsachse 2 ein 3D-Modell des Fahrzeugreifens 1 zu erzeugen.

Dabei wird ein 3D-Modell des Fahrzeugreifens 1 anhand des Bildes des Fahrzeugreifens 1 und des Modells des Zylinders 4 und der Rotationsachse 2 mittels der Bildverarbeitungsvorrichtung 14 innerhalb eines von der Bildaufnahmevorrichtung 8 bereitgestellten räumlichen Koordinatensystem 9 erzeugt.

Erfindungsgemäß wird eine Auswertevorrichtung 15 bereitgestellt, wobei die Auswertevorrichtung 15 zur Bestimmung einer Profiltiefe des Fahrzeugreifens 1 in Abhängigkeit des 3D-Modells des Fahrzeugreifens 1 vorgesehen ist,

Weiter wird ein Normalvektor 6 einer Mantelfläche 16 des Zylinders 4 bestimmt, wobei der Normalvektor 6 der Mantelfläche 16 des Zylinders 4 parallel zu einer Bildaufnahmerichtung 7 des Bildes des Fahrzeugreifens 1 liegt. Die Bildaufnahmerichtung 7 entspricht der Richtung, in die die Bildaufnahmevorrichtung 8 zur Aufnahme eines Bildes einer Oberfläche 11 des Fahrzeugreifens 1 ausgerichtet ist.

Weiter wird ein Gravitationsvektor 5 der Erde am Ort 17 des Fahrzeugreifens 1 bestimmt.

Erfindungsgemäß wird ein räumliches Referenz-Koordinatensystem 10 in Abhängigkeit der Rotationsachse 2 des Fahrzeugreifens 1, des Gravitationsvektors 5 der Erde am Ort 17 des Fahrzeugreifens 1 und des Normalvektors 6 der Mantelfläche 16 des Zylinders 4 erzeugt.

Schließlich wird das 3D-Modell des Fahrzeugreifens 1 aus dem von der Bildaufnahmevorrichtung 8 bereitgestellten räumlichen Koordinatensystem 9 heraus in das räumliche Referenz-Koordinatensystem 10 überführt. Diese Überführung erfolgt insbesondere auf dem Wege einer Umrechnung von Koordinaten-Daten des 3D-Modells des Fahrzeugreifens 1.

In Abhängigkeit des in das räumliche Referenz-Koordinatensystem 10 überführten 3D-Modells des Fahrzeugreifens 1 wird die Profiltiefe des Fahrzeugreifens 1 bestimmt.

### Bezugszeichenliste

- 1: Fahrzeugreifen
- 2: Rotationsachse
- 3: Umlaufrichtung
- 4: Zylinder
- 5: Gravitationsvektor
- 6: Normalvektor
- 7: Bildaufnahmerichtung
- 8: Bildaufnahmevorrichtung
- 9: Räumliches Koordinatensystem der Bildaufnahmevorrichtung
- 10: Räumliches Referenz-Koordinatensystem
- 11: Oberfläche des Fahrzeugreifens
- 12: Gerade, die parallel zu der Symmetrieachse des Zylinders liegt
- 13: Gerade, die parallel zu der Rotationsachse liegt
- 14: Bildverarbeitungsvorrichtung
- 15: Auswertevorrichtung
- 16: Mantelfläche des Zylinders
- 17: Ort des Fahrzeugreifens

## Patentansprüche

1. Verfahren zur Bestimmung einer Profiltiefe eines Fahrzeugreifens (1), aufweisend die folgenden Schritte:
- Bereitstellen eines Fahrzeugreifens (1);
- Bereitstellen einer Bildaufnahmevorrichtung (8), wobei die Bildaufnahmevorrichtung (8) dazu vorgesehen ist, ein Bild des Fahrzeugreifens (1) aufzunehmen;
- Aufnahme eines Bildes des Fahrzeugreifens (1) mittels der Bildaufnahmevorrichtung (8);
- Bereitstellen eines Modells eines Zylinders (4), wobei der Zylinder (4) den Fahrzeugreifen (1) einhüllt und wobei eine Gerade (12), die entlang einer Höhen- und Symmetrieachse des Zylinders (4) verläuft, insbesondere gleich zu einer Gerade (13) ist, die entlang einer Rotationsachse (2) des Fahrzeugreifens (1) verläuft;
- Bestimmen der Rotationsachse (2) des Fahrzeugreifens, wobei der Fahrzeugreifen (1) zur Rotation um die Rotationsachse (2) in eine Umlaufrichtung (3) des Fahrzeugreifens (1) vorgesehen ist;
- Bereitstellen einer Bildverarbeitungsvorrichtung (14), wobei die Bildverarbeitungsvorrichtung (14) eingerichtet ist, anhand des Bildes des Fahrzeugreifens (1) und des Modells des Zylinders (4) und der Rotationsachse (2) ein 3D-Modell des Fahrzeugreifens (1) zu erzeugen;
- Erzeugen eines 3D-Modells des Fahrzeugreifens (1) anhand des Bildes des Fahrzeugreifens (1) und des Modells des Zylinders (4) und der Rotationsachse (2) mittels der Bildverarbeitungsvorrichtung (14) innerhalb eines von der Bildaufnahmevorrichtung (8) bereitgestellten räumlichen Koordinatensystems (9);
- Bereitstellen einer Auswertevorrichtung (15), wobei die Auswertevorrichtung (15) zur Bestimmung einer Profiltiefe des Fahrzeugreifens (1) in Abhängigkeit des 3D-Modells des Fahrzeugreifens (1) vorgesehen ist;
- **gekennzeichnet durch die weiteren Schritte:**
- Bestimmen eines Normalvektors (6) einer Mantelfläche (16) des Zylinders (4), wobei der Normalvektor (6) der Mantelfläche (16) des Zylinders (4) parallel zu einer Bildaufnahmerichtung (7) des Bildes des Fahrzeugreifens (1) liegt;
- Bestimmung eines Gravitationsvektors (5) der Erde am Ort (18) des Fahrzeugreifens (1);
- Erzeugen eines räumlichen Referenz-Koordinatensystems (10) in Abhängigkeit der Rotationsachse (2) des Fahrzeugreifens (1), des Gravitationsvektors (5) der Erde am Ort (17) des Fahrzeugreifens (1) und des Normalvektors (6) der Mantelfläche (16) des Zylinders (4);
- Überführen des 3D-Modells des Fahrzeugreifens (1) aus dem von der Bildaufnahmevorrichtung (8) bereitgestellten räumlichen Koordinatensystem (9) in das räumliche Referenz-Koordinatensystem (10);
- Bestimmen der Profiltiefe des Fahrzeugreifens (1) in Abhängigkeit des, in das räumliche Referenz-Koordinatensystem (10) überführten, 3D-Modells des Fahrzeugreifens (1).

2. Verfahren nach Anspruch 1, **dadurch gekennzeichnet, dass** ein Kreuzprodukt des Normalvektors (6) der Mantelfläche (16) des Zylinders (4) mit dem Gravitationsvektor (4) der Erde am Ort (17) des Fahrzeugreifens (1) gebildet wird und wobei die Rotationsachse (2) des Fahrzeugreifens (1) in Abhängigkeit eines Ergebnisvektors des Kreuzprodukts bestimmt wird.

3. Verfahren nach einem der vorhergehenden Ansprüche 1 oder 2, **dadurch gekennzeichnet, dass** die Bildaufnahmerichtung (7) mit einem Normalvektor (6) der Mantelfläche (16) des Zylinders (4) verglichen wird, wobei für den Fall, wonach die Bildaufnahmerichtung (7) zu keinem Normalvektor (6) der Mantelfläche (16) des Zylinders (4) parallel liegt, das von der Bildaufnahmevorrichtung (8) bereitgestellte räumliche Koordinatensystem (9) derart räumlich zu dem Fahrzeugreifen 1 ausgerichtet wird, bis die Bildaufnahmerichtung (7) parallel zu einem Normalvektor (6) der Mantelfläche (16) des Zylinders (4) liegt.

## Claims

1. Method for determining a tread depth of a vehicle tyre (1), comprising the following steps:
- providing a vehicle tyre (1);
- providing an image recording device (8), wherein the image recording device (8) is intended to record an image of the vehicle tyre (1);
- recording an image of the vehicle tyre (1) by means of the image recording device (8);
- providing a model of a cylinder (4), wherein the cylinder (4) envelops the vehicle tyre (1) and wherein a straight line (12) running along a vertical axis and axis of symmetry of the cylinder (4) is in particular identical to a straight line (13) running along a rotation axis (2) of the vehicle tyre (1);
- determining the rotation axis (2) of the vehicle tyre, wherein the vehicle tyre (1) is intended for rotation about the rotation axis (2) in a direction (3) of rotation of the vehicle tyre (1);
- providing an image processing device (14), wherein the image processing device (14) is designed to generate a 3D model of the vehicle tyre (1) on the basis of the image of the vehicle tyre (1) and the model of the cylinder (4) and the rotation axis (2);
- generating a 3D model of the vehicle tyre (1) on the basis of the image of the vehicle tyre (1) and the model of the cylinder (4) and the rotation axis (2) by means of the image processing device (14) within a spatial coordinate system (9) provided by the image recording device (8);
- providing an evaluation device (15), wherein the evaluation device (15) is intended for determining a tread depth of the vehicle tyre (1) depending on the 3D model of the vehicle tyre (1);
- **characterized by** the further steps of:
- determining a normal vector (6) of a lateral surface (16) of the cylinder (4), wherein the normal vector (6) of the lateral surface (16) of the cylinder (4) is parallel to an image recording direction (7) of the image of the vehicle tyre (1);
- determining a gravitational vector (5) of the Earth at the location (18) of the vehicle tyre (1);
- generating a spatial reference coordinate system (10) depending on the rotation axis (2) of the vehicle tyre (1), the gravitational vector (5) of the Earth at the location (17) of the vehicle tyre (1) and the normal vector (6) of the lateral surface (16) of the cylinder (4);
- converting the 3D model of the vehicle tyre (1) from the spatial coordinate system (9) provided by the image recording device (8) into the spatial reference coordinate system (10);
- determining the tread depth of the vehicle tyre (1) depending on the 3D model of the vehicle tyre (1) converted into the spatial reference coordinate system (10).

2. Method according to Claim 1, **characterized in that** a cross product of the normal vector (6) of the lateral surface (16) of the cylinder (4) with the gravitational vector (4) of the Earth at the location (17) of the vehicle tyre (1) is formed and wherein the rotation axis (2) of the vehicle tyre (1) is determined depending on a result vector of the cross product.

3. Method according to either of the preceding Claims 1 and 2, **characterized in that** the image recording direction (7) is compared with a normal vector (6) of the lateral surface (16) of the cylinder (4), wherein in the event that the image recording direction (7) is not parallel to any normal vector (6) of the lateral surface (16) of the cylinder (4), the spatial coordinate system (9) provided by the image recording device (8) is oriented spatially with respect to the vehicle tyre 1 until the image recording direction (7) is parallel to a normal vector (6) of the lateral surface (16) of the cylinder (4).

## Revendications

1. Procédé de détermination d'une profondeur de sculpture d'un pneu de véhicule (1), comprenant les étapes suivantes :
- fourniture d'un pneu de véhicule (1) ;
- fourniture d'un dispositif d'acquisition d'image (8), le dispositif d'acquisition d'image (8) étant prévu pour acquérir une image du pneu de véhicule (1) ;
- acquisition d'une image du pneu de véhicule (1) au moyen du dispositif d'acquisition d'image (8) ;
- fourniture d'un modèle d'un cylindre (4), le cylindre (4) enveloppant le pneu de véhicule (1) et une droite (12) qui s'étend le long d'un axe de hauteur et de symétrie du cylindre (4) étant en particulier identique à une droite (13) qui s'étend le long d'un axe de rotation (2) du pneu de véhicule (1) ;
- détermination de l'axe de rotation (2) du pneu de véhicule, le pneu de véhicule (1) étant prévu pour tourner autour de l'axe de rotation (2) dans un sens de rotation (3) du pneu de véhicule (1) ;
- fourniture d'un dispositif de traitement d'image (14), le dispositif de traitement d'image (14) étant conçu pour générer un modèle 3D du pneu de véhicule (1) sur la base de l'image du pneu de véhicule (1) et du modèle du cylindre (4) et de l'axe de rotation (2) ;
- génération d'un modèle 3D du pneu de véhicule (1) sur la base de l'image du pneu de véhicule (1) et du modèle du cylindre (4) et de l'axe de rotation (2) au moyen du dispositif de traitement d'image (14) dans un système de coordonnées spatial (9) fourni par le dispositif d'acquisition d'image (8) ;
- fourniture d'un dispositif d'évaluation (15), le dispositif d'évaluation (15) étant prévu pour déterminer une profondeur de sculpture du pneu de véhicule (1) en fonction du modèle 3D du pneu de véhicule (1) ;
- **caractérisé par** les étapes supplémentaires suivantes :
- détermination d'un vecteur normal (6) à une surface extérieure (16) du cylindre (4), le vecteur normal (6) à la surface extérieure (16) du cylindre (4) étant parallèle à une direction d'acquisition d'image (7) de l'image du pneu de véhicule (1) ;
- détermination d'un vecteur de gravité (5) de la Terre à l'emplacement (18) du pneu de véhicule (1) ;
- génération d'un système de coordonnées spatial de référence (10) en fonction de l'axe de rotation (2) du pneu de véhicule (1), du vecteur de gravité (5) de la Terre à l'emplacement (17) du pneu de véhicule (1) et du vecteur normal (6) à la surface extérieure (16) du cylindre (4) ;
- transfert du modèle 3D du pneu de véhicule (1) du système de coordonnées spatial (9) fourni par le dispositif d'acquisition d'image (8) au système de coordonnées spatial de référence (10) ;
- détermination de la profondeur de sculpture du pneu de véhicule (1) en fonction du modèle 3D du pneu de véhicule (1) transféré dans le système de coordonnées spatial de référence (10).

2. Procédé selon la revendication 1, **caractérisé en ce qu'**un produit vectoriel du vecteur normal (6) à la surface extérieure (16) du cylindre (4) avec le vecteur de gravité (4) de la Terre à l'emplacement (17) du pneu de véhicule (1) est calculé et dans lequel l'axe de rotation (2) du pneu de véhicule (1) est déterminé en fonction d'un vecteur résultant du produit vectoriel.

3. Procédé selon l'une des revendications 1 ou 2 précédentes, **caractérisé en ce que** la direction d'acquisition d'image (7) est comparée à un vecteur normal (6) à la surface extérieure (16) du cylindre (4), et dans le cas où la direction d'acquisition d'image (7) n'est parallèle à aucun vecteur normal (6) à la surface extérieure (16) du cylindre (4), le système de coordonnées spatial (9) fourni par le dispositif d'acquisition d'image (8) est aligné spatialement par rapport au pneu de véhicule 1 jusqu'à ce que la direction d'acquisition d'image (7) soit parallèle à un vecteur normal (6) à la surface extérieure (16) du cylindre (4).
